# EUROPEAN PATENT SPECIFICATION

(11) **EP 2 952 289 B1**
(45) Date of publication and mention of the grant of the patent: **06.02.2019**
(21) Application number: 15170920.1
(22) Date of filing: 05.06.2015
(51) Int. Cl.: B23P 15/00, B21D 53/36, B21C 35/02, A43C 11/14

(54) **METHOD TO MAKE CLAMPING LEVERS AND CORRESPONDING PLANT**
VERFAHREN ZUR HERSTELLUNG VON KLEMMHEBELN SOWIE ENTSPRECHENDE ANLAGE
PROCÉDÉ POUR FABRIQUER DES LEVIERS DE SERRAGE ET INSTALLATION CORRESPONDANTE

(30) Priority: 06.06.2014 IT UD20140098
(43) Date of publication of application: 09.12.2015
(73) Proprietor: Vega S.r.l. Società Unipersonale, 31020 San Vendemiano (TV) (IT)
(72) Inventor: Voltolina, Elia, 30035 Mirano (VE) (IT)
(74) Representative: Petraz, Gilberto Luigi

(56) References cited:
- EP-A1- 2 238 852
- EP-A1- 2 550 888
- IT-A1- PN20 120 044

## Description

### FIELD OF THE INVENTION

Forms of embodiment described here concern a method to make clamping levers for sports footwear, such as shoes, ski boots, snowboard boots, skates, mountain boots and cycling shoes.

Forms of embodiment described here also concern the respective plant to make the clamping levers for sports footwear.

### BACKGROUND OF THE INVENTION

Clamping levers are known, which make up at least part of a clamping device to be associated with sports footwear and used to close two of the flaps of the latter. The clamping levers are substantially flat in shape, normally fork-shaped and are provided with through holes into which pivoting elements are inserted, suitable to pivot the clamping lever with parts of the clamping device.

The clamping levers are generally obtained from an extruded section shape with an oblong development and having a cross section substantially equal to the shape in section of two clamping levers located adjacent and specular to each other.

The extruded section shape is also provided with through holes that extend for the whole of its length and that, in use, define the pivoting holes to pivot each of the clamping levers with parts of the clamping device. The through holes present in the extruded section shape are generally made in correspondence with the longitudinal edges of the extruded section shape.

The clamping levers are made from the extruded section shape, using mechanical workings, such as cutting, punching or shearing operations.

A method is known, for example, for making clamping levers starting from an extruded section shape, using chip removal operations such as for example milling. In particular, the milling operations allow to define the external perimeter shape of the clamping lever, so that it can be later used.

Although this known solution allows to obtain high-quality clamping levers, it entails extremely long working times, and frequent maintenance operations on the work machines, such as replacing worn milling tools.

Methods for making clamping levers are also known using cold molding and shearing operations.

Although this known solution allows to obtain a considerable reduction in working times, it gives poor-quality clamping levers, for example due to the deformations to which the extruded section shape is subjected at least in correspondence with the through holes. Indeed, these deformations can compromise the functionality of the pivoting ends, and therefore the clamping lever has to be discarded.

A method is also known for making clamping levers that comprises a first working to mill the extruded product, to define upon it external perimeter portions of the clamping lever that will define the pivoting ends. Subsequently a second milling working is provided, which allows to cut the extruded section shape into portions or modules, with a suitable length to obtain, from each module, two or more clamping levers.

Finally, a third working is provided to shear the modules in order to separate from each of them the clamping lever in its finished external perimeter shape.

During the shearing working, operations to shape the clamping lever can also be provided.

This latter solution is, however, extremely expensive in terms of production times and management costs.

The milling operations, both to define the pivoting ends precisely and also to separate the modules from the extruded section shape, require a considerable quantity of material to be removed from the extruded section shape, and this entails a considerable increase in the duration of the production cycle and frequent maintenance interventions, at least on the milling machine.

Separating the extruded section shape into modules also requires long times for positioning them in the molding/shearing machine for subsequent separation. However, this can entail imperfections in alignment between the portions of clamping lever defined with the milling operations and those defined with the shearing operations.

Document IT PN20120044 is known, which describes a method for obtaining clamping levers for sports footwear. This document provides to obtain, by linear milling, from a section shape provided with longitudinal holes, a semi-worked piece comprising several pairs of projections that include the holes. Furthermore, this known document provides to cut, by linear milling from the semi-worked piece, a module that already includes the projections, with the corresponding holes, constituting the forks of the component, such as a lever arm. The module has a limited length and sizes such as to contain the profile of two or more finished pieces. Finally, this known document provides final forming and separation of two or more finished pieces simultaneously by a final operation of shearing the module.

Documents EP-A-2.238.852 and EP-A-2.550.888 are also known, which describe a method for obtaining clamping levers for sports footwear.

There is therefore a need to perfect a method and a plant for making clamping levers that can overcome at least one of the disadvantages of the state of the art.

In particular, one purpose of the present invention is to perfect a method for making clamping levers that allows to obtain, both quickly and economically, clamping levers starting from an extruded section shape.

Another purpose of the present invention is to perfect a method for making clamping levers and a corresponding plant that allows to obtain high-quality clamping levers.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, forms of embodiment described here concern a method to make clamping levers for sports footwear. According to one form of embodiment, the method comprises at least a working of at least one extruded section shape provided with at least one hole made through along the longitudinal extension of the extruded section shape and in its thickness. During the working at least an external perimeter edge of the clamping lever is made. The external perimeter edge defines part of a pivoting end of the clamping lever, and the pivoting end is made on the extruded section shape in correspondence to the at least one hole.

In accordance with one aspect of the present invention, the method comprises:
- a first shearing operation to make at least a first through incision in the extruded section shape which, during use, defines at least a first surface portion of the external perimeter edge, the first surface portion not comprising the pivoting end;
- a first cutting operation, by chip removal, in order to separate the clamping lever from the extruded section shape and to define in the clamping lever second surface portions, which define at least part of said pivoting end.

The method according to the present invention allows to work the first surface portion of the external perimeter edge not affected by the holes of the extruded section shape, by means of shearing. On the contrary, the second surface portion, since it is affected by the holes, is worked by cutting so as to preserve the shape of the holes and to guarantee that a high-quality product is obtained. In this way it is possible to produce a well-defined clamping lever, without imperfections in correspondence with the holes.

Moreover, the cutting operations also allow to separate each clamping lever from the extruded section shape, avoiding further working as provided in the known solutions described above.

According to the present description, moreover, the first cutting operation is carried out on a first longitudinal portion of extruded section shape in which the first through incisions have already been made. Furthermore, the first shearing operation is carried out simultaneously with the first cutting operation on a second longitudinal portion of the extruded section shape disposed upstream with respect to the first longitudinal portion in a direction of feed.

In this way it is possible to synchronize the cutting and shearing operation on the extruded section shape.

The method according to the present invention thus allows to reduce the times needed to complete a work cycle to obtain clamping levers, improving the overall productive capacity.

According to a possible form of embodiment, the method provides to make, in the extruded section shape and for each clamping lever, an intermediate through seating that defines two of the pivoting ends, separating them from each other.

According to another form of embodiment, the intermediate seating is defined by an internal perimeter edge, and also, during the making of the intermediate seating the following operations are provided:
- a second shearing operation to make, in the extruded section shape, at least a second through incision which, during use, defines at least a first surface portion of the internal perimeter edge, which does not comprise the pivoting end, and
- a second cutting operation, by removal of material, in order to define in the clamping lever second surface portions of the internal perimeter edge which define the pivoting ends.

This solution allows to make clamping levers with double pivoting ends, wherein the latter are not deformed by the shearing operations as happens instead in solutions known in the state of the art.

According to a variant, the first shearing operation is made by means of a first shearing station and the second shearing operation is made by means of a second shearing station, disposed downstream in the direction of feed. In this variant, the first shearing operation can be made at the same time as the second shearing operation, in a position upstream in the direction of feed, or alternatively the first shearing operation is made before the second shearing operation, in a position upstream with respect to the direction of feed.

According to another variant, by means of a single shearing tool, the first shearing operation is made at the same time and in the same position in the direction of feed, with respect to the second shearing operation.

According to still other variants, the first cutting operation is made at the same time as the second cutting operation, in a position upstream with respect to the direction of feed.

According to other forms of embodiment, the extruded section shape is defined by a first portion and a second portion both having an oblong development, located symmetrical with respect to each other and reciprocally connected by means of a connection flap. The first portion and the second portion each have a shape of the cross section substantially similar to that of one of the clamping levers. In these forms of embodiment, during the working of the extruded section shape, it is provided to shear and cut the first portion and the second portion simultaneously, in order to make from each of them one of the clamping levers.

Other forms of embodiment described here concern a plant for making clamping levers for sports footwear. The plant can advantageously implement a method according to the present description.

According to one form of embodiment, the plant comprises machines for working at least an extruded section shape provided with at least a hole made through along the longitudinal extension of the extruded section shape and in its thickness. The machines are configured to make at least an external perimeter edge of the clamping lever. The external perimeter edge defines part of a pivoting end of the clamping lever, and the pivoting end is made on the extruded section shape in correspondence to the at least one hole.

The plant comprises, aligned in a direction of feed of the extruded section shape:
- a shearing machine configured to make a first shearing operation in order to make, in the extruded section shape, at least a first through incision which, during use, defines at least a first surface portion of the external perimeter edge, the first surface portion not comprising the pivoting end;
- a cutting machine through chip removal, disposed downstream of the shearing machine and configured to perform a first cutting operation in order to separate the clamping lever from the extruded section shape and to define in the clamping lever second surface portions that define the pivoting end.

The plant according to the present invention allows to work an extruded product defined by two portions with an oblong development, positioned symmetrical with respect to each other, each of which can be cut and sheared to produce clamping levers. In this way it is possible to increase the overall productivity of the plant.

According to the present description, the cutting machine is configured to carry out the first cutting operation on a first longitudinal portion of the extruded section shape in which the first through incisions have already been made. Moreover, the shearing machine is configured to carry out the first shearing operation simultaneously with the first cutting operation on a second longitudinal portion of the extruded section shape disposed upstream with respect to the first longitudinal portion in the direction of feed.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view of a plant for making clamping levers according to the present invention;
- fig. 2 is a plan view of a part of the plant in fig. 1;
- fig. 3 is a section view from III to III in fig. 2;
- fig. 4 is a perspective view of a clamping lever obtained with the method and plant according to the present invention.

To facilitate comprehension, the same reference numbers have been used, where possible, to identify identical common elements in the drawings.

### DETAILED DESCRIPTION OF SOME FORMS OF EMBODIMENT

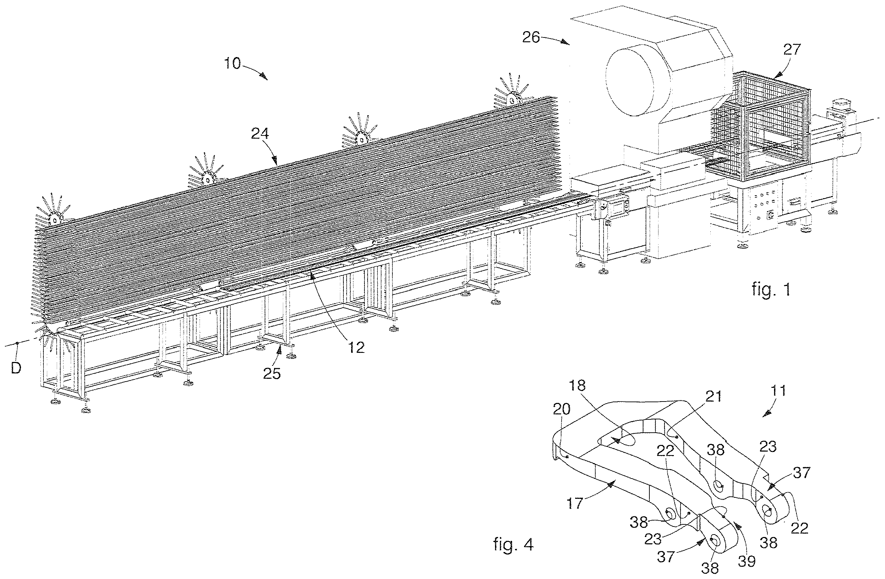

Fig. 1 is used to describe forms of embodiment of a plant for making clamping levers 10, which is configured to make a plurality of clamping levers 11 for sports footwear starting from an extruded section shape 12 having an oblong development.

Example forms of embodiment of clamping lever 11, which can be made using the plant 10 according to the present invention, are described hereafter using fig. 4.

In these forms of embodiment, the clamping lever 11 has a substantially flat shape in section, possibly shaped curved to respect particular requirements of the application in which it will be applied.

The clamping lever 11 is provided with at least one pivoting end 37, in this specific case for example two pivoting ends 37, adjacent to each other, which allow it to be connected with parts of the clamping device of the sports footwear.

In the forms of embodiment described using fig. 4, the pivoting ends 37 are provided with one or more pivoting holes 38 into which, during use, pins can be inserted to allow the reciprocal connection with parts of the clamping device.

The clamping lever 11 has at least one external perimeter edge 17 that defines the external shape of the clamping lever 11.

The external perimeter edge 17 is defined by a first surface portion 20 which is not affected by the pivoting end 37, that is, it does not comprise the pivoting end 37, and by at least a second surface portion 22 which defines at least part of the pivoting end 37.

According to a possible form of embodiment, the clamping lever 11 has a fork-like configuration in which its prongs define the pivoting ends 37.

The clamping lever 11 can also be provided with a through intermediate seating 39, which separates and defines the pivoting ends 37.

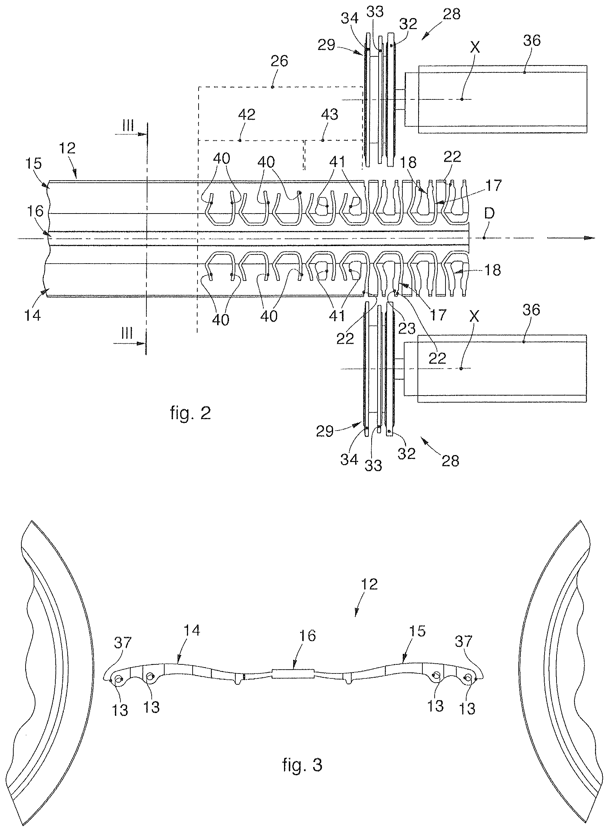

The intermediate seating 39 is defined by an internal perimeter edge 18, in turn defined by a first surface portion 21 located inside the clamping lever 11 and which does not affect the pivoting end 37, and by a second surface portion 23 which defines the pivoting ends 37. The extruded section shape 12 (see fig. 3), from which the clamping levers 11 are made, can have a substantially flat cross section, and possibly curved.

According to the present invention, a single clamping lever 11, or two clamping levers 11 opposite each other, can be obtained from each cross section of the extruded section shape 12.

According to the form of embodiment described using fig. 3, the extruded section shape 12 is defined by a first portion 14 and a second portion 15 both with an oblong development, located symmetrical with respect to each other and reciprocally connected by means of a connection flap 16.

The first portion 14 and the second portion 15 each have a shape of the cross section substantially similar to that of one of the clamping levers 11 to be obtained.

In fact, from the first portion 14 and respectively from the second portion 15 respective clamping levers 11 can be made, disposed adjacent to each other along the longitudinal development of the extruded section shape 12.

According to some forms of embodiment of the present invention, the extruded section shape 12 is provided with one or more through holes 13 made along its longitudinal extension and in its thickness.

The holes 13 will define, during use, the pivoting holes 38 of the pivoting end 37.

The holes 13 can be made in correspondence with one or both the lateral edges of the extruded section shape 12.

According to forms of embodiment described using figs. 1, 2 and 3, a plant 10 according to the present invention can be configured to make clamping levers 11 disposed adjacent and specular to each other in the extruded section shape 12.

The plant 10 (see fig. 1) comprises a feed machine 25, a shearing machine 26 and a cutting machine 27, in this specific case aligned with each other in the direction of feed D of the extruded section shape 12.

The plant 10 can be provided with positioning and/or gripping members, configured to position on each occasion the extruded section shape 12 in the direction of feed D in correspondence with the machines provided, and to keep the extruded section shape 12 in a fixed position during the workings that are carried out.

The feed machine 25 is configured to take a plurality of extruded section shapes 12 from a storage 24 and to feed them to the shearing machine 26 in the direction of feed D.

The feed machine 25 can comprise a movement mean such as a platform with rollers or a conveyor belt.

The shearing machine 26 is disposed downstream of the feed machine 25. The shearing machine 26 can be configured to shear the extruded section shape 12 and to define at least a surface portion of the external perimeter edge 17 and/or the internal perimeter edge 18.

In particular, the shearing machine 26 (fig. 2) is configured to define, on the extruded section shape 12, at least first through incisions 40 which in use will define the first surface portions 20, described above, of the external perimeter edge 17 of the clamping lever 11.

According to a possible solution, described for example using fig. 2, the shearing machine 26 is also configured to define on the extruded section shape 12 second through incisions 41 which in use will define the first surface portions 21, described above, of the internal perimeter edge 18. The second through incisions 41 can be comprised between the first through incisions 40.

In possible implementations, the first through incisions 40 and the second through incisions 41 can be made directly with a single shearing operation, using a single shearing tool that makes both the first through incisions 40 and the second through incisions 41 simultaneously.

According to a possible alternative form of embodiment, the first through incisions 40 can be made in a first shearing station 42 while the second through incisions 41 can be made in a second shearing station 43, separate from the first shearing station 42 and aligned in the direction of feed D downstream of the first shearing station 42. The first shearing station 42 and the second shearing station 43 can be activated in sequence one after the other, to carry out the desired shearing operations, or simultaneously.

The first through incisions 40 and the second through incisions 41, in particular, do not provide a separation of the clamping lever 11 from the extruded section shape 12.

This guarantees a correct alignment and positioning of the portion of extruded section shape 12 which on each occasion is worked in the shearing stations. Furthermore, this solution allows to feed the cutting machine 27 with the portions of extruded section shape to be worked, disposing them in a predefined position for the cutting operations.

Advantageously, forms of embodiment described here do not provide to obtain a module of limited length and moreover the respective shearing operations are carried out at the beginning, and not to obtain the finished clamping lever.

The cutting machine 27 is disposed downstream of the shearing machine 26 and is configured to separate the clamping levers 11 from the extruded section shape 12, by removal of material, in particular chip removal.

Advantageously, the cutting operation using chip removal can be a single cutting operation that can perform multiple operations. Advantageously, moreover, the cutting operation by chip removal obtains and frees the finished clamping lever 11 from the extruded section shape 12, which can remain integral except for the removed parts.

The cutting machine 27 can be chosen from a group comprising a milling machine, a band saw, a circular saw, a numerical control cutting machine, a laser cutting machine or similar machines suitable for the purpose. In a specific example, the cutting machine 27 is configured to execute milling, that is, it is a milling machine.

During the cutting operation, at least the second surface portion 22 of the external perimeter edge 17 is defined in the clamping levers 11, in this case also the second surface portion 23 of the internal perimeter edge 18.

The cutting machine 27 can be synchronized with the shearing machine 26 so that it can operate on a portion of extruded section shape 12 on which the first incisions 40 and the second incisions 41 of each clamping lever 11 have already been made.

The cutting machine 27 comprises at least a cutting device 28, in this specific case two cutting devices 28, each configured to work one of the portions 14, 15 of the extruded section shape 12 in order to separate the clamping levers 11 from the latter.

The cutting devices 28 are disposed in opposite positions with respect to the extruded section shape 12 being worked.

Each cutting device 28 comprises a cutting element 29 and a displacement element 36, configured to support the cutting element 29 and to displace it in a direction parallel and/or transverse to the direction of feed D.

The displacement element 36 allows to move the cutting element 29 toward and/or away from the extruded section shape 12, to selectively cut it.

In the form of embodiment in fig. 2, each cutting element 29 can be configured to work on several clamping levers 11 disposed adjacent to each other in the direction of feed D.

In the forms of embodiment where the cutting machine 27 is configured to perform milling, each cutting element 29 comprises at least one milling cutter, in the case of fig. 2 a first milling cutter 32, a second milling cutter 33 and a third milling cutter 34, each rotating around an axis of rotation X parallel to the direction of feed D.

With reference to the forms of embodiment described using fig. 2, the first milling cutter 32 works the second surface portion 23 of the internal perimeter edge 18.

The second milling cutter 33 and the third milling cutter 34 work the second surface portion 22 of the external perimeter edge 17 of the clamping lever 11.

It is clear that modifications and/or additions of parts may be made to the plant for making clamping levers and corresponding method as described heretofore, without departing from the field and scope of the present invention.

For example, it can be provided that a molding machine or press is interposed between the shearing machine 26 and the cutting machine 27, suitable to shape the portion of extruded section shape 12 appropriately, so as to confer on the clamping lever 11, which will be subsequently separated from the extruded section shape 12, a predefined shape.

It is also clear that, although the present invention has been described with reference to some specific examples, a person of skill in the art shall certainly be able to achieve many other equivalent forms of a plant for making clamping levers and corresponding method, having the characteristics as set forth in the claims and hence all coming within the field of protection defined thereby.

## Claims

1. Method to make clamping levers (11) for sports footwear, said method comprising at least a working of at least one extruded section shape (12) provided with at least one hole (13) made through along the longitudinal extension of said extruded section shape (12) and in its thickness, making at least an external perimeter edge of said clamping lever (11) during said working, said external perimeter edge (17) defining part of a pivoting end (37) of said clamping lever (11), and said pivoting end (37) being made on said extruded section shape (12) in correspondence to said at least one hole (13), wherein said method comprises:
- a first shearing operation to make at least a first through incision (40) in said extruded section shape (12) which, during use, defines at least a first surface portion (20) of said external perimeter edge (17), said first surface portion (20) not comprising said pivoting end (37);
- a first cutting operation, by chip removal, in order to separate said clamping lever (11) from said extruded section shape (12) and to define in said clamping lever (11) second surface portions (22) which define at least part of said pivoting end (37);
**characterized in that** the first cutting operation is carried out on a first longitudinal portion of extruded section shape (12) in which said first through incisions (40) have already been made,
and wherein the first shearing operation is carried out simultaneously with said first cutting operation, on a second longitudinal portion of said extruded section shape (12) disposed upstream with respect to said first longitudinal portion in a direction of feed (D).

2. Method as in claim 1, **characterized in that,** in said extruded section shape (12) and for each clamping lever (11), it provides to make an intermediate through seating (39) that defines two of said pivoting ends (37), separating them from each other.

3. Method as in claim 2, **characterized in that** said intermediate seating (39) is defined by an internal perimeter edge (18), **and in that** during the making of said intermediate seating (39) the following operations are provided:
- a second shearing operation to make, in said extruded section shape (12), at least a second through incision (41) which, during use, defines at least a first surface portion (21) of said internal perimeter edge (18), which does not comprise said pivoting end (37), and
- a second cutting operation, by milling, in order to define in said clamping lever (11) second surface portions (23) of said internal perimeter edge (18) which define said pivoting ends (37).

4. Method as in claim 3, **characterized in that** said first shearing operation is made by means of a first shearing station (42) and said second shearing operation is made by means of a second shearing station (43), disposed downstream in said direction of feed (D)

5. Method as in claim 4, **characterized in that** said first shearing operation is made at the same time as said second shearing operation, in a position upstream in said direction of feed (D).

6. Method as in claim 4, **characterized in that** said first shearing operation is made before said second shearing operation, in a position upstream with respect to said direction of feed (D).

7. Method as in claim 3, **characterized in that** by means of a single shearing tool, said first shearing operation is made simultaneously and in the same position in said direction of feed (D), with respect to said second shearing operation.

8. Method as in any of the claims from 3 to 7, **characterized in that** said first cutting operation is made simultaneously with said second cutting operation, in a position upstream with respect to said direction of feed (D).

9. Method as in any claim hereinbefore, **characterized in that** said extruded section shape (12) is defined by a first portion (14) and a second portion (15) both having an oblong development, located symmetrical with respect to each other and reciprocally connected by means of a connection flap (16), said first portion (14) and said second portion (15) each having a shape of the cross section substantially similar to that of one of the clamping levers (11), **and in that** during said working of the extruded section shape (12), it is provided to shear and cut said first portion (14) and said second portion (15) simultaneously in order to make from each of them one of said clamping levers (11).

10. Method as in any claim hereinbefore, **characterized in that** said cutting operations are carried out by means of a technique chosen from milling, cutting with a band saw, cutting with a circular saw, cutting with a numerical control cutting machine, laser cutting.

11. Plant to make clamping levers (11) for sports footwear, said plant comprising machines (26, 27) for working at least an extruded section shape (12) provided with at least a hole (13) made through along the longitudinal extension of said extruded section shape (12) and in its thickness, said machines (26, 27) being configured to make at least an external perimeter edge (17) of said clamping lever (11), said external perimeter edge (17) defining part of a pivoting end (37) of said clamping lever (11), and said pivoting end (37) being made on said extruded section shape (12) in correspondence to said at least one hole (13), wherein said plant comprises, aligned in the direction of feed (D) of said extruded section shape (12):
- a shearing machine (26) configured to make a first shearing operation in order to make in said extruded section shape (12) at least a first through incision (40) which, during use, defines at least a first surface portion (20) of said external perimeter edge (17), said first surface portion (20) not comprising said pivoting end (37);
- a cutting machine (27) through chip removal, disposed downstream of said shearing machine (26) and configured to perform a first cutting operation in order to separate said clamping lever (11) from said extruded section shape (12) and to define in said clamping lever (11) second surface portions (22) that define said pivoting end (37);
**characterized in that** said cutting machine (27) is configured to carry out the first cutting operation on a first longitudinal portion of extruded section shape (12) in which said first through incisions (40) have already been made,
and wherein said shearing machine (26) is configured to carry out the first shearing operation simultaneously with said first cutting operation, on a second longitudinal portion of said extruded section shape (12) disposed upstream with respect to said first longitudinal portion in a direction of feed (D).

12. Plant as in claim 11, **characterized in that** said shearing machine (26) and said cutting machine (27) are disposed aligned with respect to each other along a common direction corresponding to the direction of feed (D) of said extruded section shape (12).

13. Plant as in claim 11 or 12, **characterized in that** said extruded section shape (12) is defined by a first portion (14) and by a second portion (15) with an oblong development, located symmetrical with respect to each other and reciprocally connected by means of a connection flap (16), said first portion (14) and said second portion (15) each having a shape of the cross section substantially similar to that of one of the clamping levers (11), **and in that** said shearing machine (26) and said cutting machine (27) are configured to shear and respectively cut simultaneously said first portion (14) and said second portion (15) in order to make from each of these one of said clamping levers (11).

14. Plant as in claim 11, 12 or 13, **characterized in that** said cutting machine (27) is chosen from a group comprising: a milling machine, a band saw, a circular saw, a numerical control cutting machine, a laser cutting machine.

## Patentansprüche

1. Verfahren zur Herstellung von Klemmhebeln (11) für Sportschuhe, wobei das Verfahren zumindest eine Bearbeitung zumindest eines stranggepressten Profilteils (12) umfasst, das mit zumindest einem Loch (13) versehen ist, das entlang der Längserstreckung des stranggepressten Profilteils (12) und in seiner Dicke durchgebohrt ist, wodurch zumindest ein äußerer Umfangsrand des Klemmhebels (11) während der Bearbeitung geformt wird, wobei der äußere Umfangsrand (17) einen Teil eines Schwenkendes (37) des Klemmhebels (11) definiert, und das Schwenkende (37) am stranggepressten Profilteil (12) an dem zumindest einem Loch (13) geformt ist, worin das Verfahren umfasst:
- einen ersten Schervorgang zur Durchführung zumindest eines ersten durchgehenden Einschnitts (40) in dem stranggepressten Profilteil (12), der während der Benutzung zumindest einen ersten Oberflächenabschnitt (20) des äußeren Umfangsrands (17) definiert, wobei der erste Oberflächenabschnitt (20) das Schwenkende (37) nicht umfasst;
- einen ersten Schneidvorgang durch Zerspanung, um den Klemmhebel (11) von dem stranggepressten Profilteil (12) zu trennen und im Klemmhebel (11) zweite Oberflächenabschnitte (22) zu definieren, die zumindest einen Teil des Schwenkendes (37) definieren;
**dadurch gekennzeichnet, dass** der erste Schneidvorgang an einem ersten Längsabschnitt des stranggepressten Profilteils (12) durchgeführt wird, in dem die ersten durchgehenden Einschnitte (40) bereits gemacht wurden,
und worin der erste Schervorgang gleichzeitig mit dem ersten Schneidvorgang an einem zweiten Längsabschnitt des stranggepressten Profilteils (12), der stromauf des ersten Längsabschnitts in einer Zuführrichtung (D) angeordnet ist, durchgeführt wird.

2. Verfahren nach Anspruch 1, **dadurch gekennzeichnet, dass** es, in dem stranggepressten Profilteil (12) und für jeden Klemmhebel (11), vorsieht, eine durchgehende Zwischenaufnahme (39) vorzunehmen, die zwei der Schwenkenden (37) definiert und sie voneinander trennt.

3. Verfahren nach Anspruch 2, **dadurch gekennzeichnet, dass** die Zwischenaufnahme (39) von einem inneren Umfangsrand (18) definiert ist, **und dass** während der Herstellung der Zwischenaufnahme (39) folgende Vorgänge vorgesehen sind:
- einen zweiten Schervorgang zur Durchführung, in dem stranggepressten Profilteil (12), zumindest eines zweiten durchgehenden Einschnitts (41), der während der Benutzung zumindest einen ersten Oberflächenabschnitt (21) des inneren Umfangsrands (18) definiert, der das Schwenkende (37) nicht umfasst, und
- einen zweiten Schneidvorgang durch Fräsen, um im Klemmhebel (11) zweite Oberflächenabschnitte (23) des inneren Umfangsrands (18) zu definieren, die die Schwenkenden (37) definieren.

4. Verfahren nach Anspruch 3, **dadurch gekennzeichnet, dass** der erste Schervorgang mittels einer ersten Scherstation (42) durchgeführt wird und der zweite Schervorgang mittels einer zweiten Scherstation (43) durchgeführt wird, die stromab in der Zuführrichtung (D) angeordnet ist.

5. Verfahren nach Anspruch 4, **dadurch gekennzeichnet, dass** der erste Schervorgang gleichzeitig mit dem zweiten Schervorgang, in einer Stellung stromauf in der Zuführrichtung (D), durchgeführt wird.

6. Verfahren nach Anspruch 4, **dadurch gekennzeichnet, dass** der erste Schervorgang vor dem zweiten Schervorgang, in einer Stellung stromauf im Hinblick auf die Zuführrichtung (D), durchgeführt wird.

7. Verfahren nach Anspruch 3, **dadurch gekennzeichnet, dass** mittels eines einzigen Scherwerkzeugs der erste Schervorgang gleichzeitig mit dem zweiten Schervorgang und in der gleichen Stellung in der Zuführrichtung (D) wie beim zweiten Schervorgang durchgeführt wird.

8. Verfahren nach einem der Ansprüche 3 bis 7, **dadurch gekennzeichnet, dass** der erste Schneidvorgang gleichzeitig mit dem zweiten Schneidvorgang, in einer Stellung stromauf im Hinblick auf die Zuführrichtung (D), durchgeführt wird.

9. Verfahren nach einem der vorhergehenden Ansprüche, **dadurch gekennzeichnet, dass** das stranggepresste Profilteil (12) von einem ersten Abschnitt (14) und von einem zweiten Abschnitt (15) definiert wird, die beide einen länglichen Verlauf aufweisen, symmetrisch zueinander angeordnet und durch eine Verbindungsklappe (16) gegenseitig verbunden sind, wobei die Form des Querschnitts jeweils des ersten Abschnitts (14) und des zweiten Abschnitts (15) im Wesentlichen derjenigen der Klemmhebel (11) ähnlich ist, **und dass** während der Bearbeitung des stranggepressten Profilteils (12) es vorgesehen ist, den ersten Abschnitt (14) und den zweiten Abschnitt (15) gleichzeitig zu scheren und zu schneiden, um aus jedem von diesen einen der genannten Klemmhebel (11) herzustellen.

10. Verfahren nach einem der vorhergehenden Ansprüche, **dadurch gekennzeichnet, dass** die Schneidvorgänge durch eine Technik durchgeführt werden, die unter Fräsen, Schneiden mit einer Bandsäge, Schneiden mit einer Kreissäge, Schneiden mit einer numerisch gesteuerten Schneidmaschine, Laser-Schneiden ausgewählt wird.

11. Anlage zur Herstellung von Klemmhebeln (11) für Sportschuhe, wobei die Anlage Maschinen (26, 27) zur Bearbeitung zumindest eines stranggepressten Profilteils (12) umfasst, das mit zumindest einem Loch (13) versehen ist, das entlang der Längserstreckung des stranggepressten Profilteils (12) und in seiner Dicke durchgebohrt ist, wobei die Maschinen (26, 27) dafür ausgerichtet sind, um zumindest einen äußeren Umfangsrand (17) des Klemmhebels (11) herzustellen, wobei der äußere Umfangsrand (17) einen Teil eines Schwenkendes (37) des Klemmhebels (11) definiert, und das Schwenkende (37) am stranggepressten Profilteil (12) an dem zumindest einem Loch (13) geformt ist, worin die Anlage, in der Zuführrichtung (D) des stranggepressten Profilteils (12) ausgerichtet, umfasst:
- eine Schermaschine (26), die dafür eingerichtet ist, um einen ersten Schervorgang zur Durchführung zumindest eines ersten durchgehenden Einschnitts (40) in dem stranggepressten Profilteil (12) durchzuführen, der während der Benutzung zumindest einen ersten Oberflächenabschnitt (20) des äußeren Umfangsrands (17) definiert, wobei der erste Oberflächenabschnitt (20) das Schwenkende (37) nicht umfasst;
- eine Schneidmaschine (27) durch Zerspanung, die stromab der Schermaschine (26) angeordnet und dafür eingerichtet ist, einen ersten Schneidvorgang durchzuführen, um den Klemmhebel (11) von dem stranggepressten Profilteil (12) zu trennen und im Klemmhebel (11) zweite Oberflächenabschnitte (22) zu definieren, die das Schwenkende (37) definieren;
**dadurch gekennzeichnet, dass** die Schneidmaschine (27) dafür eingerichtet ist, um den ersten Schneidvorgang an einem ersten Längsabschnitt des stranggepressten Profilteils (12) durchzuführen, in dem die ersten durchgehenden Einschnitte (40) bereits gemacht wurden,
und worin die Schermaschine (26) dafür eingerichtet ist, um den ersten Schervorgang gleichzeitig mit dem ersten Schneidvorgang an einem zweiten Längsabschnitt des stranggepressten Profilteils (12), der stromauf des ersten Längsabschnitts in einer Zuführrichtung (D) angeordnet ist, durchzuführen.

12. Anlage nach Anspruch 11, **dadurch gekennzeichnet, dass** die Schermaschine (26) und die Schneidmaschine (27) entlang einer gemeinsamen Richtung zueinander ausgerichtet angeordnet sind, die der Zuführrichtung (D) des stranggepressten Profilteils (12) entspricht.

13. Anlage nach Anspruch 11 oder 12, **dadurch gekennzeichnet, dass** das stranggepresste Profilteil (12) von einem ersten Abschnitt (14) und von einem zweiten Abschnitt (15) definiert wird, die beide einen länglichen Verlauf aufweisen, symmetrisch zueinander angeordnet und durch eine Verbindungsklappe (16) gegenseitig verbunden sind, wobei die Form des Querschnitts jeweils des ersten Abschnitts (14) und des zweiten Abschnitts (15) im Wesentlichen derjenigen der Klemmhebel (11) ähnlich ist, **und dass** die Schermaschine (26) und die Schneidmaschine (27) dafür ausgerichtet sind, um den ersten Abschnitt (14) und den zweiten Abschnitt (15) gleichzeitig zu scheren bzw. zu schneiden, um aus jedem von diesen einen der genannten Klemmhebel (11) herzustellen.

14. Anlage nach Anspruch 11, 12 oder 13, **dadurch gekennzeichnet, dass** die Schneidmaschine (27) aus einer Gruppe ausgewählt wird, die umfasst: eine Fräsmaschine, eine Bandsäge, eine Kreissäge, eine numerisch gesteuerte Schneidmaschine, eine Laser-Schneidmaschine.

## Revendications

1. Procédé pour fabriquer des leviers de serrage (11) pour des chaussures de sport, ledit procédé comprenant au moins un travail d'au moins une forme profilée extrudée (12) pourvue d'au moins un trou (13) pratiqué le long de l'extension longitudinale de ladite forme profilée extrudée (12) et dans son épaisseur, le fait de réaliser au moins un bord périphérique externe dudit levier de serrage (11) durant ledit travail, ledit bord périphérique externe (17) définissant une partie d'une extrémité de pivotement (37) dudit levier de serrage (11), et ladite extrémité de pivotement (37) étant réalisée sur ladite forme profilée extrudée (12) en correspondance avec ledit au moins un trou (13), ledit procédé comprenant :
- une première opération de cisaillement pour réaliser au moins une première incision traversante (40) dans ladite forme profilée extrudée (12) qui, durant l'utilisation, définit au moins une première partie de surface (20) dudit bord périphérique externe (17), ladite première partie de surface (20) ne comprenant pas ladite extrémité de pivotement (37) ;
- une première opération de coupe, par enlèvement de copeaux, afin de séparer ledit levier de serrage (11) de ladite forme profilée extrudée (12) et de définir dans ledit levier de serrage (11) des deuxièmes parties de surface (22) qui définissent au moins une partie de ladite extrémité de pivotement (37) ;
**caractérisé en ce que** la première opération de coupe est effectuée sur une première partie longitudinale d'une forme profilée extrudée (12) dans laquelle lesdites premières incisions traversantes (40) ont déjà été réalisées,
et la première opération de cisaillement étant effectuée simultanément à ladite première opération de coupe, sur une deuxième partie longitudinale de ladite forme profilée extrudée (12) disposée en amont par rapport à ladite première partie longitudinale dans une direction d'alimentation (D).

2. Procédé selon la revendication 1, **caractérisé en ce que**, dans ladite forme profilée extrudé (12) et pour chaque levier de serrage (11), il prévoit de réaliser un siège traversant intermédiaire (39) qui définit deux desdites extrémités de pivotement (37), les séparant l'une de l'autre.

3. Procédé selon la revendication 2, **caractérisé en ce que** ledit siège intermédiaire (39) est défini par un bord périphérique interne (18), et **en ce que**, durant la fabrication dudit siège intermédiaire (39) les opérations suivantes sont prévues :
- une deuxième opération de cisaillement, pour réaliser, dans ladite forme profilée extrudée (12), au moins une deuxième incision traversante (41) qui, durant l'utilisation, définit au moins une première partie de surface (21) dudit bord périphérique interne (18), qui ne comprend pas ladite extrémité de pivotement (37), et
- une deuxième opération de coupe, par fraisage, afin de définir dans ledit levier de serrage (11) des deuxièmes parties de surface (23) dudit bord périphérique interne (18) qui définissent lesdites extrémités de pivotement (37).

4. Procédé selon la revendication 3, **caractérisé en ce que** ladite première opération de cisaillement est effectuée au moyen d'une première station de cisaillement (42) et ladite deuxième opération de cisaillement est effectuée au moyen d'une deuxième station de cisaillement (43), disposée en aval selon ladite direction d'alimentation (D).

5. Procédé selon la revendication 4, **caractérisé en ce que** ladite première opération de cisaillement est effectuée en même temps que ladite deuxième opération de cisaillement, dans une position située en amont dans ladite direction d'alimentation (D).

6. Procédé selon la revendication 4, **caractérisé en ce que** ladite première opération de cisaillement est effectuée avant ladite deuxième opération de cisaillement, dans une position située en amont par rapport à ladite direction d'alimentation (D).

7. Procédé selon la revendication 3, **caractérisé en ce qu'**au moyen d'un seul outil de cisaillement, ladite première opération de cisaillement est effectuée simultanément et dans la même position dans ladite direction d'alimentation (D), par rapport à ladite deuxième opération de cisaillement.

8. Procédé comme dans l'une quelconque des revendications de 3 à 7, **caractérisé en ce que** ladite première opération de coupe est effectuée simultanément à ladite deuxième opération de coupe, dans une position située en amont par rapport à ladite direction d'alimentation (D).

9. Procédé selon l'une quelconque des revendications ci-dessus, **caractérisé en ce que** ladite forme profilée extrudée (12) est définie par une première partie (14) et une deuxième partie (15) ayant toutes deux un développement oblong, situées symétriquement l'une par rapport à l'autre et reliées mutuellement au moyen d'un volet de connexion (16), ladite première partie (14) et ladite deuxième partie (15) ayant chacune une forme de section transversale sensiblement similaire à celle de l'un des leviers de serrage (11), et **en ce que**, durant ledit travail de la forme profilée extrudée (12), il est prévu de cisailler et de couper simultanément ladite première partie (14) et ladite deuxième partie (15) afin de faire de chacune d'elles un desdits leviers de serrage (11).

10. Procédé selon l'une quelconque des revendications ci-dessus, **caractérisé en ce que** lesdites opérations de coupe sont effectuées au moyen d'une technique choisie parmi le fraisage, la coupe avec une scie à ruban, la coupe avec une scie circulaire, la coupe avec une machine de coupe à commande numérique, la coupe laser.

11. Installation de fabrication de leviers de serrage (11) pour des chaussures de sport, ladite installation comprenant des machines (26, 27) pour travailler au moins une forme profilée extrudée (12) pourvue d'au moins un trou (13) pratiqué le long de l'extension longitudinale de ladite forme profilée extrudée (12) et dans son épaisseur, lesdites machines (26, 27) étant conçues pour réaliser au moins un bord périphérique externe (17) dudit levier de serrage (11), ledit bord périphérique externe (17) définissant une partie d'une extrémité de pivotement (37) dudit levier de serrage (11), et ladite extrémité de pivotement (37) étant réalisée sur ladite forme profilée extrudée (12) en correspondance avec ledit au moins un trou (13), ladite installation comprenant, alignée dans la direction d'alimentation (D) de ladite forme profilée extrudée (12) :
- une cisaille (26) configurée pour effectuer une première opération de cisaillement afin de réaliser dans ladite forme profilée extrudée (12) au moins une première incision traversante (40) qui, durant l'utilisation, définit au moins une première partie de surface (20) dudit bord périphérique externe (17), ladite première partie de surface (20) ne comprenant pas ladite extrémité de pivotement (37) ;
- une machine (27) de coupe par enlèvement de copeaux, disposée en aval de ladite machine de cisaillement (26) et configurée pour effectuer une première opération de coupe afin de séparer ledit levier de serrage (11) de ladite forme profilée extrudée (12) et de définir dans ledit levier de serrage (11) des deuxièmes parties de surface (22) qui définissent ladite extrémité de pivotement (37) ; **caractérisé en ce que** ladite machine de coupe (27) est configurée pour effectuer la première opération de coupe sur une première partie longitudinale d'une forme profilée extrudée (12) dans laquelle lesdites premières incisions traversantes (40) ont déjà été réalisées,
et dans lequel ladite machine de coupe (26) est configurée pour effectuer la première opération de coupe simultanément à ladite première opération de coupe, sur une deuxième partie longitudinale de ladite forme profilée extrudée (12) disposée en amont par rapport à ladite première partie longitudinale dans une direction d'alimentation (D).

12. Installation selon la revendication 11, **caractérisée en ce que** ladite cisaille (26) et ladite machine de coupe (27) sont disposées de façon alignées l'une par rapport à l'autre selon une direction commune correspondant à la direction d'alimentation (D) de ladite forme profilée extrudée (12).

13. Installation selon la revendication 11 ou 12, **caractérisée en ce que** ladite forme profilée extrudée (12) est définie par une première partie (14) et par une deuxième partie (15) à développement oblong, situées symétriquement l'une par rapport à l'autre et reliées mutuellement au moyen d'un volet de connexion (16), ladite première partie (14) et ladite deuxième partie (15) ayant chacune une forme de section transversale sensiblement similaire à celle de l'un des leviers de serrage (11), et **en ce que** ladite cisaille (26) et ladite machine de coupe (27) sont configurées pour respectivement cisailler et couper simultanément ladite première partie (14) et ladite deuxième partie (15) afin de réaliser à partir de chacun d'elles l'un desdits leviers de serrage (11).

14. Installation selon la revendication 11, 12 ou 13, **caractérisée en ce que** ladite machine de coupe (27) est choisie dans un groupe comprenant : une fraiseuse, une scie à ruban, une scie circulaire, une machine de coupe à commande numérique, une machine de coupe laser.
